# EUROPEAN PATENT SPECIFICATION

(11) **EP 4 464 565 B1**
(45) Date of publication and mention of the grant of the patent: **27.05.2026**
(21) Application number: 23737126.5
(22) Date of filing: 06.01.2023
(51) Int. Cl.: B60W 20/20

(54) **SWITCHING CONTROL METHOD FOR HYBRID VEHICLE, VEHICLE CONTROLLER, AND HYBRID VEHICLE**
SCHALTSTEUERUNGSVERFAHREN FÜR HYBRIDFAHRZEUG, FAHRZEUGSTEUERGERÄT UND HYBRIDFAHRZEUG
PROCÉDÉ DE COMMANDE DE COMMUTATION POUR VÉHICULE HYBRIDE, DISPOSITIF DE COMMANDE DE VÉHICULE ET VÉHICULE HYBRIDE

(30) Priority: 07.01.2022 CN 202210018308
(43) Date of publication of application: 20.11.2024
(73) Proprietor: Great Wall Motor Company Limited, Baoding, Hebei 071000 (CN)
(72) Inventor: CONG, Ziran, Baoding, Hebei 071000 (CN); CHEN, Qilin, Baoding, Hebei 071000 (CN); LIN, Hao, Baoding, Hebei 071000 (CN)
(74) Representative: Klunker IP Patentanwälte PartG mbB
(86) International application number: PCT/CN2023/070874
(87) International publication number: WO 2023/131264

(56) References cited:
- CN-A- 112 124 297
- CN-A- 112 124 297
- CN-A- 112 590 760
- CN-A- 115 107 738
- JP-A- 2018 134 942
- US-A1- 2015 019 061
- US-B2- 8 306 681
- US-B2- 9 789 866
- TE BA, GAO YIN-HAN, ZENG XIAO-HUA, PENG YU-JUN, SONG DA-FENG: "Mode-switch control scheme for hybrid electric vehicle ", JOURNAL OF JILIN UNIVERSITY, vol. 46, no. 1, 1 January 2016 (2016-01-01), pages 21 - 27, XP093076972

## Description

### TECHNICAL FIELD

The present invention relates to the technical field of vehicle controlling and, more particularly, relates to a switching controlling method for a hybrid-power vehicle, an entire-vehicle controller and the hybrid-power vehicle.

### BACKGROUND

When a driver is driving a vehicle, sometimes he performs frequent switching between acceleration and deceleration, at this moment, a phenomenon that the entire-vehicle mode might be switched frequently may appear. In the mode switching, the allocation of the power torques might not be smooth. Therefore, when the entire-vehicle mode is frequently switched, the phenomenon of unsmoothness of the entire-vehicle torques may be abnormally obviously expressed. This problem is especially obvious in hybrid-power vehicles.

The hybrid-power vehicles refer to hybrid vehicles. The driving system of a hybrid-power vehicle consists of two or more power units that can operate independently. Petrol-electricity hybrid-power vehicles (Hybrid Electric Vehicles) are a typical type of hybrid-power vehicles.

US 9 789 866 B2 discloses an apparatus and a method for controlling a mode change of a hybrid electric vehicle that change a mode of the hybrid electric vehicle at an optimal reference point of mode change when a demand power of a driver is stably maintained to be greater than a predetermined level. The method includes calculating a demand power or a demand torque of a driver and determining whether the demand power or the demand torque is maintained to be equal to or greater than a first predetermined value for a first predetermined time. A mode change hysteresis line is raised when the demand power or the demand torque is maintained to be equal to or greater than the first predetermined value for the first predetermined time and then a mode change is executed based on the raised mode change hysteresis line.

### SUMMARY

An object of the present invention is to provide a switching controlling method for a hybrid-power vehicle, an entire-vehicle controller, a computer-readable storage medium, and the hybrid-power vehicle, to reduce the problems in the drivability caused by frequent mode switching.

The above object is achieved by the features of independent claim 1 regarding the method, of independent claim 12 regarding the entire-vehicle controller, of independent claim 13 regarding the computer-readable storage medium, and of independent claim 14 regarding the hybrid-power vehicle. Further embodiments are defined in the dependent claims.

The advantageous effects of the present invention are as follows: In order to solve the problems in the drivability caused by frequent mode switching, in the present invention, when the switching frequency that the hybrid-power vehicle switches between the target operating modes is greater than the preset frequency, a condition parameter when the hybrid-power vehicle switches between the target operating modes is updated according to the switching frequency, so as to reduce the switching frequency that the hybrid-power vehicle switches between the target operating modes, thereby the problems in the drivability caused by frequent mode switching are reduced. In addition, the present invention, by self-adaptive adjustment of the condition parameter, can support the switching controlling of the hybrid-power vehicle under the plurality of switching frequencies. The controlling method provided by the present invention is not only flexible in control, but also has an extensive invention range.

### BRIEF DESCRIPTION OF THE DRAWINGS

In order to more clearly illustrate the technical solutions of the present invention, the figures that are required to be used to describe the invention or the related art will be briefly described below.
FIG. 1 is a schematic flow chart of a switching controlling method for a hybrid-power vehicle;
FIG. 2 is a schematic diagram of the correspondence between the switching-mode level and the durations spent by the hybrid-power vehicle when performing latest N times of switching between the target operating modes;
FIG. 3 is a schematic diagram of the correspondence between the switching-mode level and the torques of the engine;
FIG. 4 is a schematic diagram of the correspondence between the switching-mode level and the delay durations when the hybrid-power vehicle switches between the target operating modes; and
FIG. 5 is a schematic structural diagram of an entire-vehicle controller.

### DETAILED DESCRIPTION

In order to make the technical problem to be solved, the technical solutions and the advantageous effects of the present invention clearer, the present invention will be described in further detail below with reference to the drawings.

The present invention will be described in further detail below with reference to the drawings and the specific embodiments.

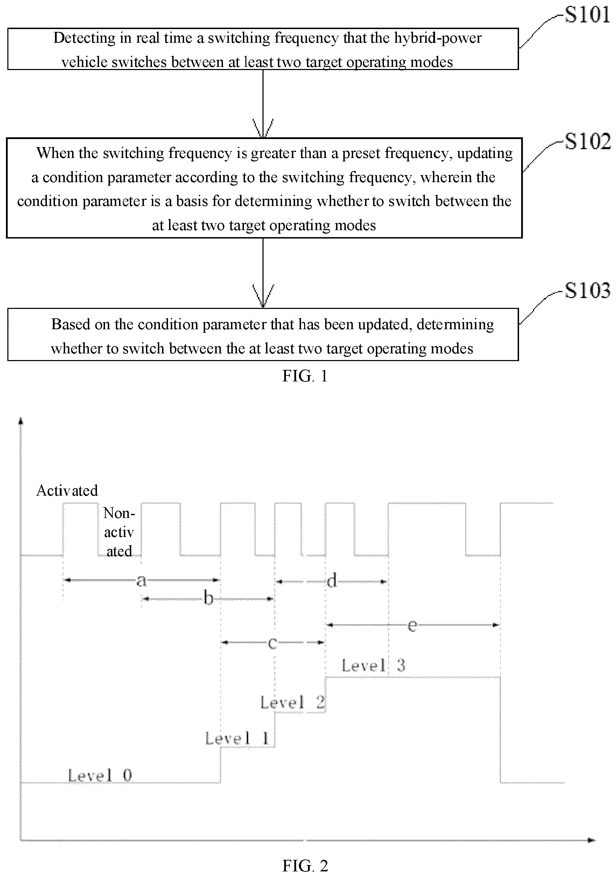

Referring to FIG. 1, FIG. 1 is a schematic flow chart of a switching controlling method for a hybrid-power vehicle. The switching controlling method for the hybrid-power vehicle includes the following steps:
S101: detecting in real time a switching frequency that the hybrid-power vehicle switches between at least two target operating modes;
S102: when the switching frequency is greater than a preset frequency, updating a condition parameter according to the switching frequency, wherein the condition parameter is a basis for determining whether to switch between the at least two target operating modes; and
S103: based on the condition parameter that has been updated, determining whether to switch between the at least two target operating modes.

The target operating modes refer to the operation modes of the hybrid-power vehicle. Exemplarily, when the target operating modes include two modes of a mode A and a mode B, the switching between the target operating modes of the hybrid-power vehicle refers to that the hybrid-power vehicle switches from the mode A to the mode B, or that the hybrid-power vehicle switches from the mode B to the mode A. When the target operating modes include three modes of a mode A, a mode B and a mode C, the switching between the target operating modes of the hybrid-power vehicle refers to that the hybrid-power vehicle switches from the mode A to the mode B, or that the hybrid-power vehicle switches from the mode B to the mode A, or that the hybrid-power vehicle switches from the mode A to the mode C, or that the hybrid-power vehicle switches from the mode C to the mode A, or that the hybrid-power vehicle switches from the mode B to the mode C, or that the hybrid-power vehicle switches from the mode C to the mode B. When the target operating modes include more modes, the cases are similar to the above examples, and are not discussed further herein.

The switching frequency that the hybrid-power vehicle switches between the target operating modes is detected in real time, the condition parameter of the hybrid-power vehicle is determined according to the switching frequency, and subsequently according to the condition parameter, it is determined whether to switch the operation mode. Specifically, when the switching frequency is greater than the preset frequency, the condition parameter of the hybrid-power vehicle may be updated according to the switching frequency. When the switching frequency is not greater than the preset frequency, a default condition parameter of the hybrid-power vehicle that is preset may be used, i.e., not updating the condition parameter.

The condition parameter refers to a parameter that is involved in condition determination performed when the hybrid-power vehicle switches between the target operating modes. The condition parameter can influence the switching time that the hybrid-power vehicle switches between the target operating modes.

The step of detecting in real time the switching frequency that the hybrid-power vehicle switches between the at least two target operating modes may include the following steps:
detecting in real time the switching time quantity (number of times) that the hybrid-power switches vehicle between the at least two target operating modes within the latest time period, and according to the switching time quantity, determining the switching frequency that the hybrid-power switches between the target operating modes.

The duration of the latest time period may be constant; for example, it may be T. When the current moment is t, the time quantity (i.e., the switching time quantity) that the hybrid-power vehicle switches between the target operating modes within the time period (t-T)~t may be detected in real time. Subsequently, the switching frequency that the hybrid-power vehicle switches between the target operating modes is determined according to the switching time quantity, or the switching time quantity may also be directly used as a characterizing quantity of the switching frequency that the hybrid-power vehicle switches between the target operating modes.

The step of detecting in real time the switching frequency the hybrid-power vehicle switches between the at least two target operating modes may include the following steps:
detecting in real time the duration spent by the hybrid-power vehicle when performing the latest N times of the switching between the target operating modes, wherein N is a preset time quantity; and according to the duration spent by the hybrid-power vehicle when performing the latest N times of the switching, determining the switching frequency that the hybrid-power vehicle switches between the target operating modes.

The duration spent by the hybrid-power vehicle when performing the latest N times of the switching between the target operating modes is detected. Subsequently, the switching frequency that the hybrid-power vehicle switches between the target operating modes is determined according to the duration, or the duration is directly used as a characterizing quantity of the switching frequency that the hybrid-power vehicle switches between the target operating modes.

The step of updating the condition parameter according to the switching frequency may include the following steps:
according to the switching frequency, determining a switching-mode level of the hybrid-power vehicle; and
based on the switching-mode level, updating the condition parameter.

The switching frequencies of different magnitudes correspond to the switching-mode levels of different magnitudes. For different switching-mode levels, the updating amount, or, in other words, the adjustment amount, of the condition parameter is not the same.

The solution will be described below with examples. For example, the three durations (A, B and C, wherein A<B<C) spent by hybrid-power vehicles when performing the latest N times of the switching and three switching-mode levels (level 1, level 2 and level 3) may be set, and it is assumed that, within a time period Ts, the hybrid-power vehicles switch N times between the target operating modes. Based on the above conditions:
if Ts ∈ (0,A], then it is determined that the switching-mode level is the level 3;
if Ts ∈ (A,B], then it is determined that the switching-mode level is the level 2;
if Ts ∈ (B,C], then it is determined that the switching-mode level is the level 1; and
if Ts ∈ (C,+∞], then it is determined that the switching-mode level is the level 0.

FIG. 2 provides another example. In FIG. 2, the "non-activated" corresponds to before the mode switching, and the "activated" corresponds to after the mode switching. FIG. 2 takes the case as an example in which the hybrid-power vehicles switch between the target operating modes for three times (in other words, N=3, and the Ts durations are based on the lengths illustrated in the figure), then it is obtained that a ∈ (B,C], b ∈ (A,B], c/d ∈ (0,A], and e ∈ (C,+∞]. In other words, if the switching frequency is higher, the switching-mode level is higher.

The condition parameter may include a reserved torque of the engine of the hybrid-power vehicle.

The reserved torque of the engine of the hybrid-power vehicle is positively correlated with the switching frequency.

If the switching frequency is greater, the reserved torque of the engine of the hybrid-power vehicle is greater. This can ensure that, after the hybrid-power vehicle has performed the switching between the target operating modes (for example, after the hybrid-power vehicle has switched from a series-connection mode to a parallel-connection mode), the power-assistance capacity of the driving electric motor covers a larger torque range, thereby the operation conditions requiring a larger torque that might happen are satisfied. Moreover, if the reserved torque is greater, it is more difficult for the switching between the target operating modes to happen, thereby the switching frequency of the target operating modes is effectively reduced, the problems in the drivability caused by frequent mode switching are reduced.

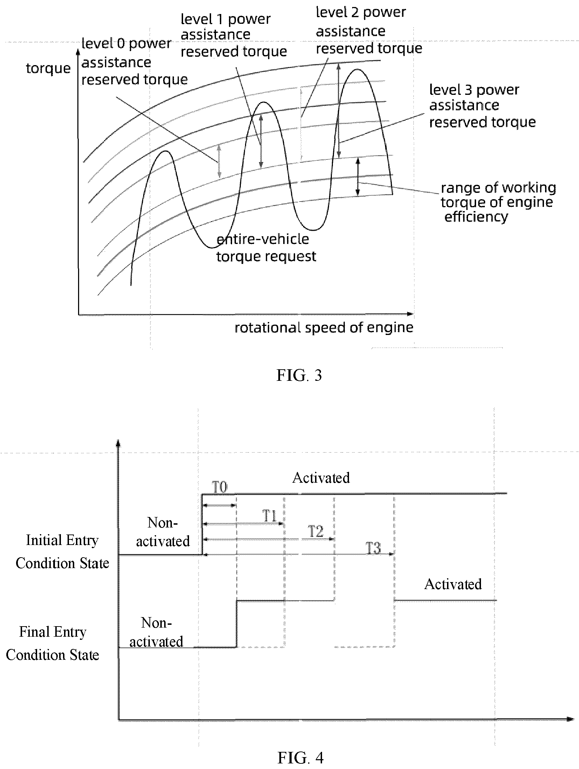

The present invention may be comprehended with reference to the above-described switching-mode level and reserved torque. Referring to FIG. 3, FIG. 3 shows the magnitudes of the reserved torque of the engine under the different switching-mode levels (corresponding to the different switching frequencies). It can be known from FIG. 3 that, if the switching frequency is greater, the reserved torque of the engine is greater, the torque range of the engine is also greater. At this moment, it is more difficult for the switching between the target operating modes to happen (for example, the hybrid-power vehicle switches from a series-connection mode to a parallel-connection mode), thereby reducing of the switching frequency is realized.

The condition parameter may include a delay duration when the hybrid-power vehicle switches between the target operating modes. The delay duration when the hybrid-power vehicle switches between the target operating modes is positively correlated with the switching frequency.

If the switching frequency is greater, the delay duration when the hybrid-power vehicle switches between the target operating modes is longer, which can effectively reduce the switching frequency that the hybrid-power vehicle switches between the target operating modes, to reduce the problems in the drivability caused by frequent mode switching.

Based on this, the present invention may be comprehended with reference to the above-described switching-mode level. Referring to FIG. 4, in FIG. 4, the "non-activated" corresponds to before the mode switching, and the "activated" corresponds to after the mode switching. FIG. 4 shows the delay durations (wherein T0, T1, T2 and T3 correspond to level 0, level 1, level 2 and level 3, respectively) when the hybrid-power vehicle switches between the target operating modes under the different switching-mode levels (corresponding to the different switching frequencies). It can be known from FIG. 4 that, if the switching frequency is greater, the delay duration when the hybrid-power vehicle switches between the target operating modes is longer. In the preceding example, a sufficient torque is reserved for the entire vehicle, to prevent false triggering. However, during the travelling of the vehicle, both of the vehicle speed and the torque continuously vary. When some operation conditions happen, the conditions for the switching between the target operating modes might be satisfied within a short time, so as to result in unexpected mode switching. In order to prevent this, in the present example, the delay duration when the hybrid-power vehicle switches between the target operating modes is determined according to the switching-mode level. In other words, in the present example, when the other conditions for the switching between the target operating modes are satisfied, it is further required to reach the delay duration, before the hybrid-power vehicle is controlled to perform the action of the switching between the target operating modes. In this way, false triggering can be prevented from appearing to a large extent, thereby the frequency of the mode switching is reduced to ensure a stable driving environment.

The target operating modes may be a series-connection mode and a parallel-connection mode.

That the hybrid-power vehicle operates in the series-connection mode indicates that the engine of the hybrid-power vehicle outputs an electricity-generation torque, and the electric motor of the hybrid-power vehicle supplies a driving torque. That the hybrid-power vehicle operates in the parallel-connection mode indicates that both of the engine and the electric motor of the hybrid-power vehicle output driving torques.

It is taken into consideration that the series-connection mode and the parallel-connection mode mainly involve the operation modes of the engine and the electric motor, and the engine and the electric motor are the power source of the hybrid-power vehicle. When the operation modes of the engine and the electric motor are switched frequently, the problem of unsmoothness of the entire-vehicle torques easily happens. In other words, the switching between the series-connection mode and the parallel-connection mode, because of the participation of the engine and the electric motor, easily causes the problem of unsmoothness of the entire-vehicle torques in the frequent switching. Therefore, the influence caused by the frequent switching between the series-connection mode and the parallel-connection mode is preferentially taken into consideration. Certainly, other modes may be taken into consideration than the series-connection mode and the parallel-connection mode, and they can be suitable for the other modes that the frequent switching might affect the driving action.

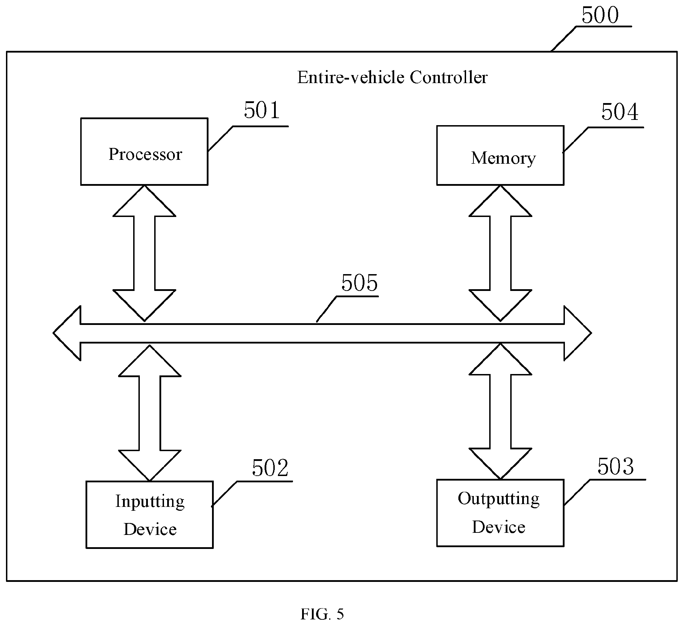

Referring to FIG. 5, an entire-vehicle controller 500 is provided in the second aspect of the present invention, wherein the entire-vehicle controller 500 includes one or more processors 501, one or more inputting devices 502, one or more outputting devices 503 and one or more memories 504. The processors 501, the inputting devices 502, the outputting devices 503 and the memories 504 realize the communication therebetween via a communication bus 505. The memory 504 is configured to store a computer program, and the computer program includes a program instruction. The processor 501 is configured to execute the program instruction stored in the memory 504. The processor 501 is configured to be capable of invoking the above program instruction, to execute the steps of the methods of the present invention. It should be understood that, in the present invention, the processor 501 may be a central processing unit (CPU). The processors 501 may also be another generic processor, digital signal processor (DSP), application specific integrated circuit (ASIC), field-programmable gate array (FPGA) or another programmable logic device, discrete gate or transistor logic device, discrete hardware assembly and so on. The generic processor may be a microprocessor or any other conventional processor. The inputting device 502 may include a touchpad, a fingerprint collecting sensor (for collecting the fingerprint information and the fingerprint-direction information of the user), a microphone and so on. The outputting device 503 may include a display (an LCD and so on), a loudspeaker and so on. The memory 504 may include a read-only memory and a random access memory, and provide instructions and data to the processor 501. A part of the memory 504 may further include a non-volatile random access memory. For example, the memory 504 may further store the information of the device type. In a specific implementation, the processors 501, the inputting devices 502 and the outputting devices 503 according to the present invention may execute the method steps according to the implementations of the switching controlling method for the hybrid-power vehicle according to the present invention.

A computer-readable storage medium is provided in the third aspect of the present invention, the computer-readable storage medium stores a computer program, wherein the computer program includes a program instruction, the program instruction, when executed by a processor, implements all or some of the steps according to the embodiments of the switching controlling method for the hybrid-power vehicle stated above. These steps may also be implemented by relative hardware under control by a computer program. The computer program includes a computer program code, and the computer program code may be a source code, an object code, an executable file, some intermediate forms, and so on. The computer-readable medium may include any entity or device that can carry the computer program code, including a recording medium, a USB flash disk, a mobile hard disk drive, a diskette, an optical disk, a computer memory, a ROM (read-only memory), a RAM (random access memory), an electric carrier signal, a telecommunication signal, a software distribution medium and so on.

The computer-readable storage medium may be an internal storage unit of the entire-vehicle controller, for example, a hard disk or an internal memory of the entire-vehicle controller. The computer-readable storage medium may also be an external storage device of the entire-vehicle controller, for example, a plug-connected hard disk, a smart media card (SMC), a secure digital (SD) card, a flash card, and so on, that the entire-vehicle controller is equipped with. Further, the computer-readable storage medium may also include not only the internal storage unit of the entire-vehicle controller, but also the external storage device. The computer-readable storage medium is configured to store the computer program, and other programs and data that are required by the entire-vehicle controller. The computer-readable storage medium may also be configured to temporarily store the data that have already been outputted or will be outputted.

A person skilled in the art can envisage that the algorithms or the steps according to the present invention may be implemented by using electronic hardware, computer software or a combination thereof. In order to clearly explain the interchangeability between the hardware and the software, the above description has described generally the steps according to the functions. Whether those functions are executed by hardware or software depends on the specific applications and the design constraints of the technical solutions. A person skilled in the art may employ different methods to implement the described functions with respect to each of the specific applications, but the implementations should not be considered as extending beyond the scope of the present invention.

A person skilled in the art can clearly understand that, in order for the convenience and concision of the description, the specific working processes of the above-described entire-vehicle controller may refer to the corresponding processes according to the above-described methods, and are not discussed further herein.

It should be understood that the disclosed controller and method may be implemented in other manners. For example, the above-described controller embodiments are merely illustrative. For example, the division between the units is merely a division in the logic functions, and in the practical implementation there may be another mode of division. For example, multiple units or components may be combined or may be integrated into another system, or some of the features may be omitted, or not implemented. Additionally, the coupling or direct coupling or communicative connection between the illustrated or discussed components may be via the indirect coupling or communicative connection between interfaces or units, and may also be electric, mechanical or in other forms.

The units that are described as separate components may or may not be physically separate. The components that are displayed as units may or may not be physical units. In other words, the components may be located at the same one location, and may also be distributed to a plurality of network units. Some or all of the units may be selected according to practical demands to realize the purposes of the solutions of the present invention.

In addition, the functional units according to the present invention may be integrated into one processing unit, or the units may also separately physically exist, or two or more of the units may also be integrated into one unit. The above-described integrated unit may be implemented in the form of hardware, and may also be embodied in the form of a software function unit.

A hybrid-power vehicle is provided in the fourth aspect of the present invention, wherein the hybrid-power vehicle includes the entire-vehicle controller stated above.

## Claims

1. A switching controlling method for a hybrid-power vehicle, comprising:
(S101) detecting in real time a switching frequency that the hybrid-power vehicle switches between at least two target operating modes;
(S102) when the switching frequency is greater than a preset frequency, updating a condition parameter according to the switching frequency, wherein the condition parameter comprises a reserved torque of an engine of the hybrid-power vehicle, and wherein the reserved torque of the engine is positively correlated with the switching frequency, the condition parameter being a basis for determining whether to switch between the at least two target operating modes; and
(S103) based on the condition parameter that has been updated, determining whether to switch between the at least two target operating modes.

2. The switching controlling method for a hybrid-power vehicle according to claim 1, wherein the step of detecting in real time the switching frequency that the hybrid-power vehicle switches between the at least two target operating modes comprises:
detecting in real time a switching time quantity that the hybrid-power vehicle switches between the at least two target operating modes within a latest time period; and
according to the switching time quantity, determining the switching frequency that the hybrid-power vehicle switches between the at least two target operating modes.

3. The switching controlling method for a hybrid-power vehicle according to claim 2, wherein a time span of the latest time period is T; and when a current moment is t, a starting moment of the latest time period is t-T, and an ending moment is t.

4. The switching controlling method for a hybrid-power vehicle according to claim 1, wherein the step of detecting in real time the switching frequency that the hybrid-power vehicle switches between the at least two target operating modes comprises:
detecting in real time a first duration spent by the hybrid-power vehicle when performing latest N times of switching between the at least two target operating modes, wherein N is a preset time quantity; and
according to the first duration, determining the switching frequency that the hybrid-power vehicle switches between the at least two target operating modes.

5. The switching controlling method for a hybrid-power vehicle according to claim 4, wherein N=3.

6. The switching controlling method for a hybrid-power vehicle according to claim 1, wherein the step of updating the condition parameter according to the switching frequency comprises:
according to the switching frequency, determining a switching-mode level of the hybrid-power vehicle; and
based on the switching-mode level, updating the condition parameter.

7. The switching controlling method for a hybrid-power vehicle according to claim 6, wherein a quantity of the switching-mode level is 3, and the switching-mode level is divided into level 1, level 2 and level 3.

8. The switching controlling method for a hybrid-power vehicle according to claim 1, wherein the condition parameter comprises a delay duration when the hybrid-power vehicle switches between the at least two target operating modes; and
the delay duration is positively correlated with the switching frequency.

9. The switching controlling method for a hybrid-power vehicle according to any one of claims 1 to 8, wherein the at least two target operating modes comprise a series-connection mode; and
that the hybrid-power vehicle operates in the series-connection mode indicates that an engine of the hybrid-power vehicle outputs an electricity-generation torque, and an electric motor of the hybrid-power vehicle supplies a driving torque.

10. The switching controlling method for a hybrid-power vehicle according to any one of claims 1 to 8, wherein the at least two target operating modes comprise a parallel-connection mode; and
that the hybrid-power vehicle operates in the parallel-connection mode indicates that both of an engine and an electric motor of the hybrid-power vehicle output driving torques.

11. An entire-vehicle controller (500), comprising a memory (504), a processor (501) and a computer program that is stored in the memory (504) and executable in the processor (501), wherein the processor (501), when executing the computer program, is caused to carry out the steps of the method according to any one of claims 1 to 10.

12. A computer-readable storage medium, the computer-readable storage medium storing a computer program, wherein the computer program, when executed by a processor (501), causes the processor (501) to carry out the steps of the method according to any one of claims 1 to 10

13. A hybrid-power vehicle, wherein the hybrid-power vehicle comprises the entire-vehicle controller according to claim 11.

## Patentansprüche

1. Umschaltsteuerungsverfahren für ein Hybridantriebsfahrzeug, mit:
(S101) Erfassen in Echtzeit einer Umschaltfrequenz, mit der das Hybridantriebsfahrzeug zwischen mindestens zwei Zielbetriebsmodi umschaltet;
(S102) wenn die Umschaltfrequenz größer als eine voreingestellte Frequenz ist, Aktualisieren eines Bedingungsparameters gemäß der Umschaltfrequenz, wobei der Bedingungsparameter ein Reservedrehmoment eines Motors des Hybridantriebsfahrzeugs aufweist, und wobei das Reservedrehmoment des Motors positiv mit der Umschaltfrequenz korreliert ist, wobei der Bedingungsparameter eine Grundlage zum Bestimmen darstellt, ob zwischen den mindestens zwei Zielbetriebsmodi umzuschalten ist; und
(S103) basierend auf dem aktualisierten Bedingungsparameter, Bestimmen, ob zwischen den mindestens zwei Zielbetriebsmodi umzuschalten ist.

2. Umschaltsteuerungsverfahren für ein Hybridantriebsfahrzeug nach Anspruch 1, wobei der Schritt des Erfassens in Echtzeit der Umschaltfrequenz, mit der das Hybridantriebsfahrzeug zwischen den mindestens zwei Zielbetriebsmodi umschaltet, aufweist:
Erfassen in Echtzeit einer Umschaltanzahl, mit der das Hybridantriebsfahrzeug innerhalb eines letzten Zeitraums zwischen den mindestens zwei Zielbetriebsmodi umschaltet; und
gemäß der Umschaltanzahl, Bestimmen der Umschaltfrequenz, mit der das Hybridantriebsfahrzeug zwischen den mindestens zwei Zielbetriebsmodi umschaltet.

3. Umschaltsteuerungsverfahren für ein Hybridantriebsfahrzeug nach Anspruch 2, wobei eine Zeitspanne des letzten Zeitraums T ist; und wenn ein aktueller Zeitpunkt t ist, ein Anfangszeitpunkt des letzten Zeitraums t-T und ein Endzeitpunkt t ist.

4. Umschaltsteuerungsverfahren für ein Hybridantriebsfahrzeug nach Anspruch 1, wobei der Schritt des Erfassens in Echtzeit der Umschaltfrequenz, mit der das Hybridantriebsfahrzeug zwischen den mindestens zwei Zielbetriebsmodi umschaltet, aufweist:
Erfassen in Echtzeit einer ersten Zeitdauer, die das Hybridantriebsfahrzeug beim Durchführen der letzten N Umschaltvorgänge zwischen den mindestens zwei Zielbetriebsmodi benötigt, wobei N eine voreingestellte Anzahl ist; und
gemäß der ersten Zeitdauer, Bestimmen der Umschaltfrequenz, mit der das Hybridantriebsfahrzeug zwischen den mindestens zwei Zielbetriebsmodi umschaltet.

5. Umschaltsteuerungsverfahren für ein Hybridantriebsfahrzeug nach Anspruch 4, wobei N=3.

6. Umschaltsteuerungsverfahren für ein Hybridantriebsfahrzeug nach Anspruch 1, wobei der Schritt des Aktualisierens des Bedingungsparameters gemäß der Umschaltfrequenz aufweist:
gemäß der Umschaltfrequenz, Bestimmen einer Umschaltmodusstufe des Hybridantriebsfahrzeugs; und
basierend auf der Umschaltmodusstufe, Aktualisieren des Bedingungsparameters.

7. Umschaltsteuerungsverfahren für ein Hybridantriebsfahrzeug nach Anspruch 6, wobei eine Anzahl der Umschaltmodusstufen 3 beträgt und die Umschaltmodusstufen in Stufe 1, Stufe 2 und Stufe 3 unterteilt ist.

8. Umschaltsteuerungsverfahren für ein Hybridantriebsfahrzeug nach Anspruch 1, wobei der Bedingungsparameter eine Verzögerungsdauer aufweist, wenn das Hybridantriebsfahrzeug zwischen den mindestens zwei Zielbetriebsmodi umschaltet; und
die Verzögerungsdauer positiv mit der Umschaltfrequenz korreliert ist.

9. Umschaltsteuerungsverfahren für ein Hybridantriebsfahrzeug nach einem der Ansprüche 1 bis 8, wobei die mindestens zwei Zielbetriebsmodi einen Reihenschaltungsmodus aufweisen; und
dass das Hybridantriebsfahrzeug im Reihenschaltungsmodus betrieben wird, bedeutet, dass ein Motor des Hybridantriebsfahrzeugs ein Stromerzeugungsdrehmoment ausgibt und ein Elektromotor des Hybridantriebsfahrzeugs ein Antriebsdrehmoment liefert.

10. Umschaltsteuerungsverfahren für ein Hybridantriebsfahrzeug nach einem der Ansprüche 1 bis 8, wobei die mindestens zwei Zielbetriebsmodi einen Parallelschaltungsmodus aufweisen; und
dass das Hybridantriebsfahrzeug im Parallelschaltungsmodus betrieben wird, bedeutet, dass sowohl ein Motor als auch ein Elektromotor des Hybridantriebsfahrzeugs Antriebsdrehmomente ausgeben.

11. Gesamtfahrzeugsteuergerät (500), aufweisend einen Speicher (504), einen Prozessor (501) und ein Computerprogramm, das in dem Speicher (504) gespeichert und in dem Prozessor (501) ausführbar ist, wobei der Prozessor (501) beim Ausführen des Computerprogramms veranlasst wird, die Schritte des Verfahrens nach einem der Ansprüche 1 bis 10 auszuführen.

12. Computerlesbares Speichermedium, wobei das computerlesbare Speichermedium ein Computerprogramm speichert, wobei das Computerprogramm, wenn es durch einen Prozessor (501) ausgeführt wird, den Prozessor (501) veranlasst, die Schritte des Verfahrens nach einem der Ansprüche 1 bis 10 auszuführen.

13. Hybridantriebsfahrzeug, wobei das Hybridantriebsfahrzeug das Gesamtfahrzeugsteuergerät nach Anspruch 11 aufweist.

## Revendications

1. Procédé de commande de commutation pour un véhicule hybride, comprenant :
(S101) la détection en temps réel d'une fréquence de commutation selon laquelle le véhicule hybride effectue une commutation entre au moins deux modes de fonctionnement cibles ;
(S102) lorsque la fréquence de commutation est supérieure à une fréquence prédéfinie, la mise à jour d'un paramètre de condition conformément à la fréquence de commutation, dans lequel le paramètre de condition comprend un couple de réserve d'un moteur thermique du véhicule hybride, et dans lequel le couple de réserve du moteur thermique est corrélé positivement à la fréquence de commutation, le paramètre de condition constituant une base pour déterminer s'il convient ou non d'effectuer une commutation entre les au moins deux modes de fonctionnement cibles ; et
(S103) sur la base du paramètre de condition qui a été mis à jour, la détermination de s'il convient ou non d'effectuer une commutation entre les au moins deux modes de fonctionnement cibles.

2. Procédé de commande de commutation pour un véhicule hybride selon la revendication 1, dans lequel l'étape de détection en temps réel de la fréquence de commutation selon laquelle le véhicule hybride effectue une commutation entre les au moins deux modes de fonctionnement cibles comprend :
la détection en temps réel d'une quantité de temps de commutation selon laquelle le véhicule hybride a effectué une commutation entre les au moins deux modes de fonctionnement cibles à l'intérieur d'une dernière période de temps ; et
conformément à la quantité de temps de commutation, la détermination de la fréquence de commutation selon laquelle le véhicule hybride effectue une commutation entre les au moins deux modes de fonctionnement cibles.

3. Procédé de commande de commutation pour un véhicule hybride selon la revendication 2, dans lequel une durée temporelle de la dernière période de temps est T ; et lorsqu'un instant courant est t, un instant de début de la dernière période de temps est t - T et un instant de fin est t.

4. Procédé de commande de commutation pour un véhicule hybride selon la revendication 1, dans lequel l'étape de détection en temps réel de la fréquence de commutation selon laquelle le véhicule hybride effectue une commutation entre les au moins deux modes de fonctionnement cibles comprend :
la détection en temps réel d'une première durée que le véhicule hybride a consacrée à effectuer les N dernières fois de commutation entre les au moins deux modes de fonctionnement cibles, dans lequel N représente une quantité de temps prédéfinie ; et
conformément à la première durée, la détermination de la fréquence de commutation selon laquelle le véhicule hybride effectue une commutation entre les au moins deux modes de fonctionnement cibles.

5. Procédé de commande de commutation pour un véhicule hybride selon la revendication 4, dans lequel N = 3.

6. Procédé de commande de commutation pour un véhicule hybride selon la revendication 1, dans lequel l'étape de mise à jour du paramètre de condition conformément à la fréquence de commutation comprend :
conformément à la fréquence de commutation, la détermination d'un niveau de mode de commutation du véhicule hybride ; et
sur la base du niveau de mode de commutation, la mise à jour du paramètre de condition.

7. Procédé de commande de commutation pour un véhicule hybride selon la revendication 6, dans lequel une quantité du niveau de mode de commutation est de 3, et le niveau de mode de commutation est divisé selon niveau 1, niveau 2 et niveau 3.

8. Procédé de commande de commutation pour un véhicule hybride selon la revendication 1, dans lequel le paramètre de condition comprend une durée de retard lorsque le véhicule hybride effectue une commutation entre les au moins deux modes de fonctionnement cibles ; et
la durée de retard est corrélée positivement à la fréquence de commutation.

9. Procédé de commande de commutation pour un véhicule hybride selon l'une quelconque des revendications 1 à 8, dans lequel les au moins deux modes de fonctionnement cibles comprennent un mode de connexion série ; et
le fait que le véhicule hybride fonctionne dans le mode de connexion série indique qu'un moteur thermique du véhicule hybride émet en sortie un couple de génération d'électricité, et un moteur électrique du véhicule hybride fournit un couple d'entraînement.

10. Procédé de commande de commutation pour un véhicule hybride selon l'une quelconque des revendications 1 à 8, dans lequel les au moins deux modes de fonctionnement cibles comprennent un mode de connexion parallèle ; et
le fait que le véhicule hybride fonctionne dans le mode de connexion parallèle indique qu'un moteur thermique et un moteur électrique du véhicule hybride émettent tous deux en sortie des couples d'entraînement.

11. Contrôleur de véhicule complet (500), comprenant une mémoire (504), un processeur (501) et un programme informatique qui est stocké dans la mémoire (504) et qui peut être exécuté dans le processeur (501), dans lequel le processeur (501), lorsqu'il exécute le programme informatique, est forcé à mettre en œuvre les étapes du procédé selon l'une quelconque des revendications 1 à 10.

12. Support de stockage lisible par ordinateur, le support de stockage lisible par ordinateur stockant un programme informatique, dans lequel le programme informatique, lorsqu'il est exécuté par un processeur (501), force le processeur (501) à mettre en œuvre les étapes du procédé selon l'une quelconque des revendications 1 à 10.

13. Véhicule hybride, dans lequel le véhicule hybride comprend le contrôleur de véhicule complet selon la revendication 11.
